# EUROPEAN PATENT APPLICATION

(11) **EP 4 316 978 A1**
(43) Date of publication of application: **07.02.2024**
(21) Application number: 23168275.8
(22) Date of filing: 17.04.2023
(51) Int. Cl.: B64C 11/06, B64C 11/30, B64U 50/13, B63H 1/20, B63H 3/00, B63H 3/02, B64C 11/00, B64C 11/20

(54) **VARIABLE TOROIDAL PROPELLER**

(71) Applicant: Alpraaz AB, 262 74 Ängelholm (SE)
(72) Inventor: von KOENIGSEGG, Christian, 266 54 VEJBYSTRAND (SE)
(74) Representative: Brann AB

(57) **Abstract**

A variable toroidal propeller (10) is proposed, wherein the propeller (10) comprises: a hub (12) and a toroidal propeller blade (14) connected to the hub (12). The hub (12) is arranged to operationally couple the blade (14) to an actuator (44), and the blade (14) is arranged to deform at an activation of the actuator (44).

## Description

### TECHNICAL FIELD

The proposed technology generally relates to the field of propellers for air and water applications, and particularly to variable and toroidal propellers.

### BACKGROUND

Toroidal propellers have blades that form a loop. They can be used both in air and water applications, for example in unmanned aerial vehicles and motorboats. Toroidal propellers have the advantage of being significantly quieter than traditional propeller. They are also known to create less vortices and to be more efficient. A variable propeller, or controllable pitch propeller, can change the orientation of the blades relative to the hub, typically by turning the blades around axes that are transverse to the propeller centerline. This allows for a more effective pitch to be selected at a given speed. The proposed technology aims at combining the advantages of toroidal propellers and variable propellers.

### SUMMARY

In a first aspect of the proposed technology, a variable toroidal propeller, or controllable pitch toroidal propeller, is proposed, wherein the propeller comprises: a hub, or boss, and a toroidal propeller blade connected to the hub. The hub, or propeller, is arranged to operationally couple the blade to an actuator, and the blade is arranged to deform at an activation of the actuator, or to vary its shape at an activation of the actuator, or to vary the pitch of the propeller at an activation of the actuator.

In a second aspect of the proposed technology, an assembly is proposed comprising a variable toroidal propeller, or controllable pitch toroidal propeller, and an actuator. The propeller comprises: a hub, or boss, and a toroidal propeller blade connected to the hub. The actuator is operationally coupled to the blade, for example by the hub, and arranged to deform, or vary the shape of, the blade, or to vary the pitch of the propeller at an activation of the actuator. Worded differently, the assembly comprises a variable toroidal propeller according to the first aspect of the proposed technology and an actuator, wherein the actuator is operationally coupled to the blade, for example by the hub, and arranged to deform, or vary the shape of, the blade, or to vary the pitch of the propeller at an activation of the actuator.

It is understood that the propeller may have additional toroidal blades connected to the hub, and that the actuator may be operationally coupled to the additional blade and arranged to deform the additional blades. For example, the propeller may have two, three, or four toroidal blades in total. Each of the blades may be arranged as and have any of the features, or combination of features, described below. It is further understood that the hub may be arranged to connect to a propeller shaft.

A deformation is here understood as a transformation of a body from a reference configuration to a current configuration, where a configuration is a set containing the positions of all particles of the body. It encompasses structural deformations, such as an elastic deformation. It also encompasses mechanical deformations, for example by a mechanical joint or a kinematic pair with one or more degrees-of-freedom. The deformation is understood to encompass a combination of structural deformations and mechanical deformations.

The blade may have a blade tip and may be composed of, or may comprise, a first blade portion and a second blade portion that are connected at the blade tip, the blade may comprise a first blade root and a second blade root, wherein the first blade root connects the first blade portion to the hub and second blade root connects the second blade portion to the hub. The blade is arranged to deform, or change the pitch of, the first blade portion at an activation of the actuator. Worded differently, the actuator is arranged to deform, or change the pitch of, the first blade portion. The blade may further be arranged to deform, or change the pitch of, the second blade portion at an activation of the actuator, or the actuator may further be arranged to deform, or change the pitch of, the second blade portion.

It is understood that first blade portion, a tip portion, and a second blade portion are arranged to define at least part of a loop. The first blade root and the second blade root may be disconnected or spaced apart at the hub. The blade and the hub may then jointly form a loop. The first blade root and the second blade root may be spaced apart at least parallel to, or along, the propeller centerline. This means that the blade outlines a loop when viewed from the side. This contributes to a blade that is stiffer parallel to the propeller centerline, which in extension allows for thinner blades to be used that are easier to deform. For example, this is advantageous in water applications. The first blade root and the second blade root may be spaced apart at least tangentially to the propeller centerline. This allows for shorter hubs to be used, which is advantageous in air applications.

A propeller centerline, or propeller axis of rotation, is understood as a straight reference line, or axis, passing through the hub and around which the propeller is intended to rotate in use. The propeller centerline is typically centered on, or coaxial with, the propeller shaft. A blade tip is understood as the maximum reach of the propeller blade from the propeller centerline.

A leading edge is understood as the edge of a propeller blade that leads into the fluid, or flow, when providing forward thrust. A trailing edge is understood as the edge of a propeller blade that retreats from the fluid, or flow, when providing forward thrust. When the propeller is viewed from astern, the leading edge is furthest away and the trailing edge is the closest. A chord line is here understood as a section of a helical curve centered on the propeller centerline that connects the leading edge and the trailing edge. The chord length is the length understood as length of the chord line at a given radial location.

A blade face is understood as the pressure side of the propeller blade. Typically, the blade face is visible when the propeller is viewed from astern. A blade back is understood as the suctions side of the propeller blade. Typically, the blade back is not visible when the propeller is viewed from astern.

The pitch of a propeller is generally understood as the linear distance that a propeller would move in one revolution with no slippage, or minimal slippage, in the fluid. Similarly, the pitch of a blade, or a blade portion, is generally understood as the linear distance that the blade, or blade portion, would move in one revolution of the propeller with no slippage, or minimal slippage, in the fluid. A blade section is the cross section cut by a circular cylinder centered on the propeller centerline. A pitch reference line is a line passing through the leading edge and the trailing edge of a blade section. A pitch angle is the angle between the pitch reference line and a line perpendicular to the propeller centerline. A constant pitch blade has the same pitch angle between the blade root and the blade tip. Worded differently, the blade generally has blade sections with the same pitch angle. A variable pitch blade has a pitch angle that varies between the blade root and the blade tip. Worded differently, the blade generally has sections with different pitch angles.

The blade may be arranged to cooperate with the actuator to change the geometry, or curvature, of the blade face of the first blade portion and/or the second blade portion. Worded differently, the actuator may be arranged to change the geometry, or curvature, of the blade face at a blade section of the first blade portion and/or the second blade portion. The changes may be at a blade section of the blade. For example, the blade section may be at the blade root or at the blade tip, or between the blade root and the blade tip. It is understood that the geometry of the blade back may change together with the geometry of the blade face. Deformations at the blade tip are advantageous, as they allow for the pitch of the first blade portion and the second blade portion to be changed.

The blade may be arranged to cooperate with the actuator to change the pitch of the first blade portion and/or the second blade portion at an activation of the actuator. Worded differently, the actuator may be arranged to change the pitch of the first blade portion and/or the second blade portion. The actuator may be arranged to change the pitch angle of a blade section of the first blade portion and/or the second blade portion. For example, the blade section may be at the blade root or at the blade tip, or midway between the blade root and the blade tip.

The abovementioned actuator may be a hydraulic actuator or an electromechanical actuator. An actuator is understood as a unit performing mechanical work by converting energy, for example to deform, or vary the shape of, the abovementioned blade. The work is understood to be performed at an activation of the actuator. It is further understood that the actuator must be coupled to a control unit and a source of energy to function. For example, the control unit may comprise a set of valves and the source of energy may be a hydraulic pressure source, such as a pump. The control unit may be a set of electric switches and the source of energy may be an electric battery, or the control unit may be a set of manually operated levers.

It is specified above that propeller is arranged to operationally couple the blade to the actuator, or that the actuator is operationally coupled to the blade. The propeller may comprise a mechanical connection, or mechanical arrangement, arranged to operationally couple the blade to the actuator, or that operationally couples the blade to the actuator. Worded differently, the propeller may comprise a mechanical connection arranged to convey work performed by the actuator to the blade. For example, each of the first hub section, second hub section, first blade fixture, and second blade fixture that are described below may form part of the mechanical connection.

The actuator may be positioned within the hub, or primarily positioned within the hub. This means that the complete actuator is positioned within the hub, or that most of the actuator is positioned within the hub. For example, the actuator may comprise a hydraulic cylinder and piston and the hub may form the cylinder. Worded differently, the actuator may be internal relative to hub, or the actuator may form part of the propeller.

The actuator may be positioned outside the hub, or primarily positioned outside the hub. This means that the complete actuator is positioned outside the hub, or that most of the actuator is positioned outside the hub. For example, the actuator may be an electromechanical actuator positioned outside the hub.

The hub may be a rigid structure, which means that it is not composed of sections that can shift relative to one another. In other words, the positions at which the blade connects to the hub may be fixed relative to one another.

The hub may comprise a first hub section and a second hub section, wherein the first hub section and the second hub section are structurally separate, or disjoint, and have adjustable relative orientations and/or positions. The first blade root is connected to the first hub section and the second blade root is connected to the second hub section, and the first section and the second hub section may be arranged to operationally couple to the actuator and to shift the relative orientations and/or positions of the first hub section and the second hub section at an activation of the actuator, or the actuator is arranged to shift the relative orientations and/or positions of the first hub section and the second hub section. This allows for a deformation of the blade even with the first blade root and the second blade root fixed to the hub. A change in the relative orientation or position of the first hub section and the second hub section will cause a change in the relative orientation or position of the first blade root and the second blade root, which in extension will cause the blade to deform, for example to change the pitch.

The shift in the relative orientations of the first hub section and the second hub section may be a rotation centered on the propeller centerline. The shift in the relative positions of the first hub section and the second hub section may be along, or parallel to, the propeller centerline. For example, the hub may have, or form, a cam joint between the first hub section and the second hub section arranged to shift the relative orientations of the first hub section and the second hub section by a rotation around the propeller centerline at a shift in relative positions of the first hub section and the second hub section along the propeller centerline. The actuator may then be arranged to shift the relative positions of the first hub section and the second hub section along the propeller centerline.

The hub, or propeller, may comprise a first blade fixture, or first blade attachment, that connects the first blade root to the hub or the first hub section. Similarly, the hub, or propeller, may comprise a second blade fixture, or second blade attachment, that connects the second blade root to the hub or the second hub section. It is understood that the blade fixtures are fixed to the blade roots.

The first blade root or first blade fixture may be fixed to, or fixed relative to, the hub, or to the first hub section. Similarly, the second blade root or second blade fixture may be fixed to, or fixed relative to, the hub, or to the second hub section. This means that the orientations or positions of the blade roots cannot change relative to the hub, or relative to the hub sections they are connected to.

Features and functions relating to the first blade portion are described above. The same features and functions may also be implemented in, or in relation to, the second blade portion.

The orientation and/or position of the first blade root or first blade fixture relative to the hub or first hub section may be variable, or adjustable. For example, the first blade fixture may be arranged to rotate relative to the hub or the first hub section, the first blade root may be arranged to tilt relative to the hub or the first hub section, and/or first blade root may be arranged to shift in position relative to the hub or the first hub section. Worded differently, the first blade fixture may form an articulated joint relative to the hub, or relative to the propeller centerline.

The first blade fixture and the actuator may be disjoint. This means that the first blade fixture does not contact the actuator directly. The hub or the first hub section may interconnect the first blade fixture and the actuator. Worded differently, the hub or the first hub section may link the actuator to the first blade fixture. It is described above that the actuator may be arranged to shift the relative orientations and/or positions of the first hub section and the second hub section. With the first blade fixture and the actuator being disjoint, the orientation and/or position of the first blade root or first blade fixture may be arranged shift relative to the first hub section at a shifting of the relative orientations and/or positions of the first hub section and the second hub section. In other words, the first blade root or first blade fixture may be arranged to passively shift the orientation and/or position relative to the hub or first hub section at an activation of the actuator.

The first blade root or first blade fixture may be arranged to operationally connect to the actuator and to shift, or change, its orientation and/or position relative to the hub, relative to the first hub section, or relative to the propeller centerline, at an activation of the actuator. Worded differently, the actuator may be operationally connected to the first blade root or first blade fixture and arranged to shift, or change, the orientation and/or position of the first blade root or first blade fixture relative to the hub, relative to the first hub section, or relative to the propeller centerline.

The first blade root or first blade fixture may be arranged to rotate relative to the hub or first hub section at an activation of the actuator. Worded differently, the actuator may be arranged to rotate the first blade root or first blade fixture relative to the hub or first hub section, or to rotate first blade root or first blade fixture around a first blade axis. The first blade axis may be transverse to, or perpendicular to, the propeller centerline. It is understood that the first blade axis may intersect the propeller centerline.

The first blade root or first blade fixture may be arranged to tilt relative to the hub or first hub section at an activation of the actuator. Worded differently, the actuator may be arranged to tilt the first blade root or first blade fixture relative to the hub or first hub section, or relative to the propeller centerline. The tilt may be sideway relative to the hub or first hub section, or tangential relative to the propeller centerline. Alternatively, or additionally, the tilt may be lengthwise relative to the hub or first hub section, or it may change an inclination of the blade relative to the propeller centerline. The actuator may be arranged to combine two or more of the above-described changes in orientations. For example, it may be arranged to cause a combined rotation and tilt.

The first blade root or first blade fixture may be arranged to shift its position relative to the hub or first hub section at an activation of the actuator. Worded differently, the actuator may be arranged to shift the position of the first blade root or first blade fixture relative to the hub or first hub section. The shift may be outwards or inwards relative to the hub or first hub section, or radial relative to the propeller centerline. The shift may be lengthwise relative to the hub or first hub section, or parallel relative to the propeller centerline. The shift may be sideway relative to the hub or first hub section, or tangential relative to the propeller centerline. The actuator may be arranged to combine two or more of the above-described changes in positions. For example, it may be arranged to cause a combined shifts sideways and lengthwise relative to the hub or first hub section. The actuator may be arranged to combine one or of the above-described changes in orientations with one or more of the above-described changes in positions. For example, it may be arranged to cause a combined rotation and lengthwise shift.

It is described above that the hub may have a first hub section and a second hub section that are structurally separate and are adjustable relative to one another. It is understood that this may be combined with the different changes in orientations and positions described here. For example, the actuator may be arranged to rotate the first hub section relative to the second hub section, to shift the first hub section relative to the second hub section, and to rotate the first blade fixture relative to the first hub section.

The propeller, or the blade, may be arranged to shift the position of the first blade root or first blade fixture relative to the second blade root or second blade fixture at an activation of the actuator. Worded differently, the actuator may be arranged to shift the position of the first blade root or first blade fixture relative to the second blade root or second blade fixture. The shift may be outwards or inwards relative to the hub or the first hub section, or radial relative to the propeller centerline. The shift may be aligned with the hub or first hub portion, or parallel with propeller centerline. The shift may be sideways to the hub or first hub portion, or tangential to the propeller centerline. For example, this may be achieved by having the second blade root or second blade fixture fixed to the hub, or by the actuator being arranged to shift the position of the first blade root or first blade fixture by a first shift and to shift the position of the second blade root or second blade fixture by a second shift that is different from the first shift. It is understood that the changes in relative positions described here may be combined with any of the above-described changes in orientation and/or position of the first blade root or changes in the relative orientation and/or position of the first hub section and the second hub section.

It is understood that the blade or actuator may be arranged to shift the orientation and/or position of the second blade root or second blade fixture in the same manner as described above for the first blade root or first blade fixture.

The blade may have a mean chord length, and the chord length may vary by less than 40% from the mean, less than 25% from the mean, or less than 10% from the mean, between the first blade root and the second blade root. It has been found that such chord lengths are suitable for water applications.

The blade may have a maximum chord length, and the chord length at the blade tip may be less than 40%, less than 20%, or less than 10%, of the maximum chord length. In other words, the blade may narrow towards the blade tip. The first blade portion may have a maximum chord length, and the chord length at the blade tip may be less than 40%, less than 20%, or less than 10%, of the maximum chord length. In other words, the first blade portion may narrow towards the blade tip. Similarly, the second blade portion may have a maximum chord length, and the chord length at the blade tip may be less than 40%, less than 20%, or less than 10%, of the maximum chord length. In other words, the second blade portion may narrow towards the blade tip.

The blade may have a maximum chord length, and the chord length at the hub may be less than 75%, less than 50%, or less than 25%, of the maximum chord length. In other words, the blade may narrow towards the hub. The first blade portion may have a maximum chord length, and the chord length at the first blade root may be less than 75%, less than 50%, or less than 25%, of the maximum chord length. In other words, the first blade portion may narrow towards the hub, or towards the first blade root. Similarly, the second blade portion may have a maximum chord length, and the chord length at the second blade root may be less than 75%, less than 50%, or less than 25%, of the maximum chord length. In other words, the second blade portion may narrow towards the hub, or towards the second blade root. It has been found that the narrowing towards the blade tip and the blade roots are suitable for air applications. The narrowing towards the blade tip contributes to the blade being more flexible at a deformation, such as the rotation of the first blade root relative to the hub described above, but with a maintained structural strength along the propeller centerline.

The blade may have a first side surface and a second side surface that are joined at the leading edge and the trailing edge, and the first side surface may form the blade face on the first blade portion of the propeller and the blade back on the second blade portion of the propeller. Similarly, the second side surface may form the blade back on the first blade portion of the propeller and the blade face on the second blade portion of the propeller. This means that the blade will have a twisted appearance.

The blade may have a maximum axial extension length parallel to the propeller centerline and a maximum radial extension length radial to the propeller centerline.

The maximum axial extension may be greater than 60%, greater than 80, or greater than 100% of the maximal radial extension length. Worded differently, the leading edge at the first blade root and the trailing edge at the second blade root may have an axial separation, the hub and the blade tip may have a radial separation, and the axial separation may be greater than 60%, greater than 80, or greater than 100%, of the radial separation. The axial separation is understood to be parallel with the propeller centerline and the radial separation is understood to be perpendicular to the propeller centerline. This contributes to a grater structural strength along the propeller centerline, which in extension allows for thinner blades that are easier to deform. For example, this is advantageous in water applications, in particular in high-speed water applications.

The maximum axial extension may be smaller than 40%, smaller than 20%, or smaller than 10% of the maximal radial extension length. This is advantageous in air applications. This means that the blade will have a folded appearance if the first side surface form the blade face on the first blade portion of the propeller and the blade back on the second blade portion of the propeller, as described above.

It is understood that the different extension lengths may change at the deformation of the blade, and that the relations are present at any shift in orientation and/or position of the first blade root or and the second blade rote, or first blade fixture and second blade fixture. Worded differently, the actuator may be arranged to change the maximum axial extension and the maximum radial extension of the blade. A blade may deform when used. For example, the blade tip may flex in the forward direction when used. It is understood that the specified relative extension lengths are defined for a propeller at rest.

The blade may be a monolithic structure, or a non-articulated structure, which means that the blade as such does not permit relative motion between different parts without the parts deforming. Worded differently, the first blade portion and the second blade portion may form a single continuous structure. The above-mentioned deformation of the blade is then an elastic deformation.

Alternatively, the blade may be an articulated structure, which means that the blade as such permits relative motion between different parts without the parts deforming. The blade may comprise a first blade segment, a second blade segment, and an articulated joint, wherein the first blade segment and the second blade segment are juxtaposed and interconnected by the articulated joint. The articulated joint may be a hinge joint, a rotary joint, a universal joint, or a spherical joint. This allows for the first blade segment and the second blade segment as such to move relative to one another without deforming. It is understood that the first blade segment and the second blade segment may form at least a part of, or the complete, blade. For example, the first blade portion or the second blade portion may be divided into the first blade segment and the second blade segment, or the first blade portion may constitute the first blade segment and the second blade portion may constitute the second blade segment. The latter means that the articulated joint is positioned at the blade tip. The articulated structure contributes to a greater freedom in obtaining desired deformations. It is understood that the blade may have additional blade segments and joints arranged as described above.

The blade may be composed of, or primarily composed of, fiber reinforced polymer or fiber reinforced plastic. For example, the complete blade may be composed of the fiber reinforced polymer, or the blade may be composed of the fiber reinforced polymer to more than 50% by volume. Preferably, the polymer is a cured thermosetting resin. Preferably, the fibers are carbon fibers. The carbon fibers may be in the form of woven sheets of carbon fibers. The sheets may be overlapping and form a layered structure. This allows for the thickness of the blade to vary both between the leading edge and the trailing edge and between the first blade root and the second blade root. The sheets may be aligned with the abovementioned first side surface and/or second side surface. This is advantageous in combination with the greater axial stiffness of the blade that is described above, for example with the first blade root and the second blade root being spaced apart parallel to the propeller centerline. The alignment of the sheets with the side surfaces of the blades contributes to an improved flexibility of the blade perpendicular to the side surfaces with little effect on the axial stiffness of the blade as such. The blade being composed of fiber reinforced polymer is advantageous with the abovementioned first blade fixture and second blade fixture, which may be arranged to distribute the load at the first blade root and the second blade root at an activation of the actuator. For example, the first blade fixture and second blade fixture may be of metal, such as stainless steel. The fibre reinforced polymer may have a Young's modulus of 200-500 GPa.

The blade may have, or comprise, protective shield arranged to protect the blade from cavitation. The shield may be of metal, such as stainless steel. This is advantageous in combination with the blade primarily being composed of fiber reinforced polymer, which may be less resilient to cavitation than metal. The shield may be located at the blade back. This contributes to protect the blade from suction side surface cavitation. Additionally, or alternatively, the shield may be located at the leading edge of the blade. This contributes to protect the blade from tip vortex cavitation. The shield may be a sheet like structure. It may partly define the first side surface and/or the second side surface. It may partly cover the fiber reinforced polymer. This way, the shield has lesser impact on the structural strength and deformability of the blade.

Alternatively to the blade being composed of fiber reinforced polymer, the blade may be composed of, or primarily be composed of, metal, such as stainless steel. For example, the complete blade may be composed of the metal, or the blade may be composed of the metal to more than 50%. This is advantageous in combination with the blade being an articulated structure, as described above. The metal may have a Young's modulus of at least 100 GPa, preferably between 150 GPa to 215 GPa. In one example the metal is stainless steel with a Young's modulus of 190-200 GPa, such as 193 GPa.

Alternatively, the blade may be composed of polymer, which means that the complete blade is made of this material. This is advantageous in low load air-applications.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
Fig. 1 is a perspective view of a variable toroidal propeller for high-speed water applications,
Fig. 2 is a perspective view of a variable toroidal propeller for air applications,
Fig. 3 is a perspective view of another variable toroidal propeller for high-speed water applications,
Fig. 4 is a perspective view of another variable toroidal propeller for air applications,
Fig. 5 is a schematic cross-sectional view of an assembly of the propeller of Fig. 1 and an internal hydraulic actuator,
Fig. 6 is a schematic cross-sectional view of another assembly of a variable toroidal propeller and an internal hydraulic actuator,
Fig. 7 is a schematic cross-sectional view of an assembly of the propeller of Fig. 3 and an internal hydraulic actuator,
Fig. 8 is a schematic cross-sectional view of another assembly of a variable toroidal propeller and an internal hydraulic actuator,
Fig. 9 is a schematic cross-sectional view of another assembly of a variable toroidal propeller and an internal hydraulic actuator,
Fig. 10 is a schematic cross-sectional view of another assembly of a variable toroidal propeller and an internal hydraulic actuator,
Fig. 11 is a schematic cross-sectional view of another assembly of a variable toroidal propeller and an internal hydraulic actuator,
Fig. 12 is a schematic cross-sectional view of another assembly of a variable toroidal propeller and an internal hydraulic actuator,
Fig. 13 is a schematic cross-sectional view of an assembly of the propeller of Fig. 2 and an external electromechanical actuator,
Fig. 14 is a schematic cross-sectional view of an assembly of the propeller of Fig. 4 and an external electromechanical actuator,
Fig. 15 is a perspective view of the blade and hub of a variable toroidal propeller,
Fig. 16 is a perspective view of the blade and hub of another variable toroidal propeller,
Fig. 17 is a perspective view of another variable toroidal propeller, and
Fig. 18 is a perspective view of the blade and hub of another variable toroidal propeller.

### DETAILED DESCRIPTION OF THE DRAWINGS

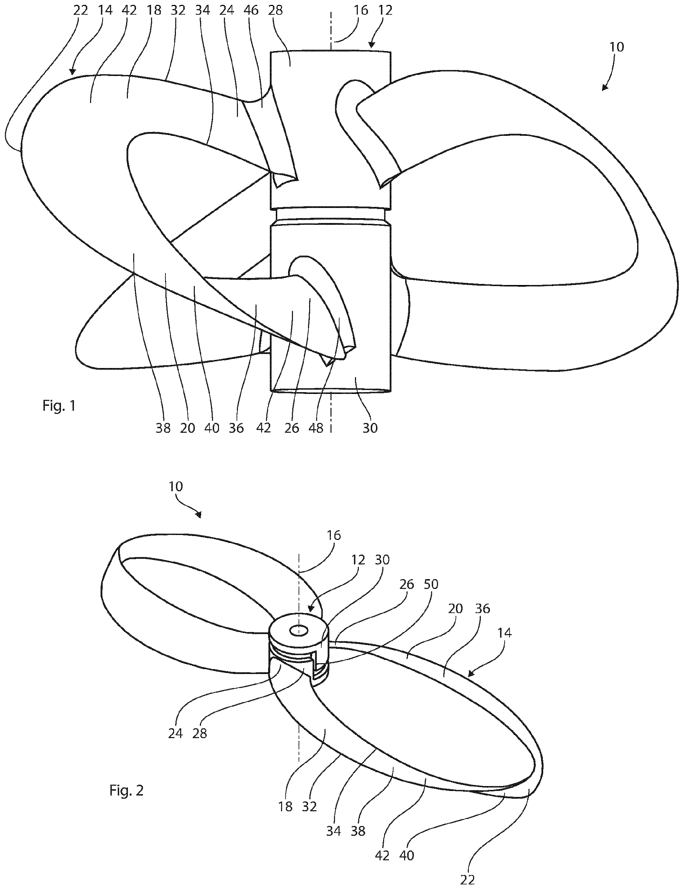

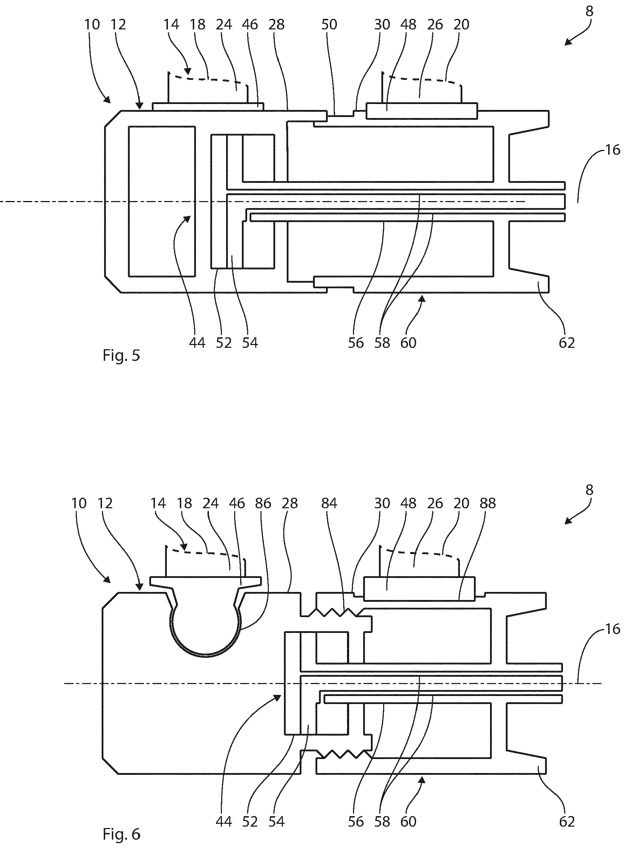

**Fig. 1** is a perspective view of a variable toroidal propeller 10 for high-speed water applications. The propeller 10 has a hub 12 and three toroidal blades 14 connected to the hub 12. Different connections between the blades 14 and the hub 12 are described below in relation to **Fig. 5****.** The hub 12 is centered on the propeller centerline 16 and the blades 14 are positioned symmetrically with respect to the propeller centerline 16. The blades 14 are structurally and functionally identical.

Each blade 14 is composed of a first blade portion 18 and a second blade portion 20 that are connected at the blade tip 22 of the blade 14. The blade has a first blade root 24 that connects the first blade portion 18 to the hub 12 and a second blade root 26 that connects the second blade portion 20 to the hub 12. The first blade root 24 and the second blade root 26 are spaced apart at the hub 12 primarily parallel to the propeller centerline 16. This way, the blade 14 and the hub 12 jointly forms a loop.

The chord length along the blade 14 varies by less than 10% from the mean chord length of the blade 14. The blade 14 has a maximum axial extension length parallel to the propeller centerline 16 and a maximum radial extension length radial to the propeller centerline 16, and the former is about 110 % of the latter. The blade 14 has a leading edge 32 and a trailing edge 34. It also has a first side surface 36 and a second side surface 38 that are joined at the leading edge 32 and the trailing edge 34. The first side surface 36 forms the blade face 40 on the first blade portion 18 and the blade back 42 on the second blade portion 20, and the second side surface 38 forms the blade back 42 on the first blade portion 18 and the blade face 40 on the second blade portion 20.

The hub 12 has a first hub section 28 and a second hub section 30 that are structurally separate and can be adjusted relative to one another. The first blade root 24 is connected to the first hub section 28 and the second blade root 26 is connected to the second hub section 30. The hub 12 has lugs 62 for attachment of the propeller 10 to a propeller shaft (not shown). The hub 12 has a first blade fixture 46 that fixes the first blade root 24 to the first hub section 28 and a second blade fixture 48 that fixes the second blade root 26 to the second hub section 30.

The blade 10 is a non-articulated monolithic structure composed of a carbon-fiber reinforced polymer. The polymer is a cured thermosetting resin and the carbon fibers are in the form of woven sheets that overlap and form a layered structure. The sheets are aligned with the first side surface 36 and second side surface 38 of the blade 14.

The propeller 10 forms an assembly 8 together with an actuator 44, as shown in **Fig. 5****.** The actuator 44 is internal to the hub 12 and can thus be considered a part of the propeller 10. The first hub section 28 is connected to the second hub section 30 by a prismatic joint 50 aligned with the propeller centerline 16. The first hub section 28 interconnects the first blade fixture 46 and the actuator 44, and the second hub section 30 interconnects the second blade fixture 48 and the actuator 44. The actuator 44 is arranged to shift the first hub section 28 relative to the second hub section 30 along the propeller centerline 16, and in extension to shift the position of the first blade root 24 relative to the second blade root 26 along the propeller centerline 16. The first hub section 28 and the second hub 30 constitutes a mechanical connection 60 arranged to convey work performed by the actuator 44 to the blade 14. This way, the actuator 44 is operationally coupled to the blade 14 and arranged to deform the blade 14.

As shown in **Fig. 5****,** the actuator 44 is a hydraulic internal actuator with a cylinder 52 formed by the first hub section 28 and a double-acting piston 54 that is fixed relative to the second hub section 30 by a piston rod 56. Hydraulic conduits 58 extend from outside the propeller 10 via the piston rod 56 to outlets on either side of the piston 54. This way, the actuator 44 is arranged to shift the position of the first hub section 28 relative to the second hub 30 by regulating the pressure of a hydraulic fluid in the hydraulic conduits 58 using an external hydraulic control system.

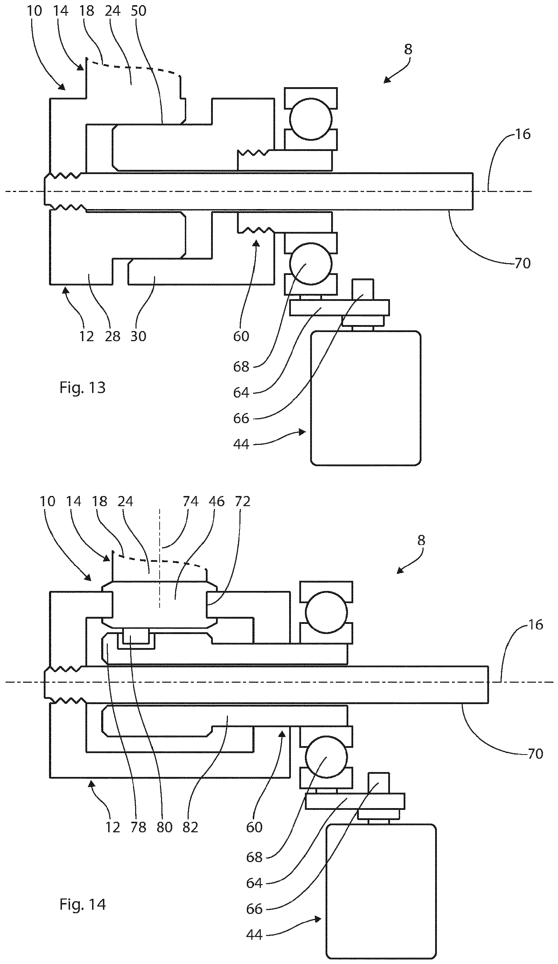

**Fig. 2** is a perspective view of a variable toroidal propeller 10 for air applications. The propeller 10 differs from the propeller 10 described in relation to **Fig. 1** by having two blades 14 and the first blade root 24 and the second blade root 26 of each blade 14 is spaced apart at the hub 12 primarily tangential to the propeller centerline 16 to form the loop. The chord length along the blade 14 varies by less than 10% from the mean chord length of the clade 14. The blade 14 has a maximum axial extension length parallel to the propeller centerline 16 and a maximum radial extension length radial to the propeller centerline 16, and the former is about 15 % of the latter. The hub 12 has no dedicated blade fixtures. Instead, the first blade root 24 is fused to the first hub section 28 and the second blade root 26 is fused to the second hub section 30. The propeller 10 forms an assembly 8 together with an actuator 44, as shown in **Fig. 13****.** The actuator 44 is external to the hub 12 and is not considered a part of the propeller 10. As in the embodiment of **Fig. 1****,** the first hub section 28 is connected to the second hub section by a prismatic joint 50 aligned with the propeller centerline 16.

The actuator 44 is an electromechanical rotary actuator and the propeller 10 has mechanical connection 60 that operationally couples the actuator 44 to the blade 14. The mechanical connection 60 is composed of an arm 64 connecting the rotary shaft 66 of the actuator 44 to the outer ring of a bearing 68. The inner ring of the bearing 68 in turn is fixed to the second hub section 30. The mechanical connection 60 is further composed of a propeller shaft 70 that is fixed to the first hub section 28, which is rotationally locked to the second hub section 30 by the prismatic joint 50. In use, the propeller shaft is connected to an electric motor (not shown) that is fixed relative to the actuator 44. The second hub section 30 will thus shift in position parallel to the propeller centerline 16 relative the first hub section 28 at an activation by the actuator 44. This way, the actuator 44 is operationally coupled to the blade 14 and arranged to deform the blade 14.

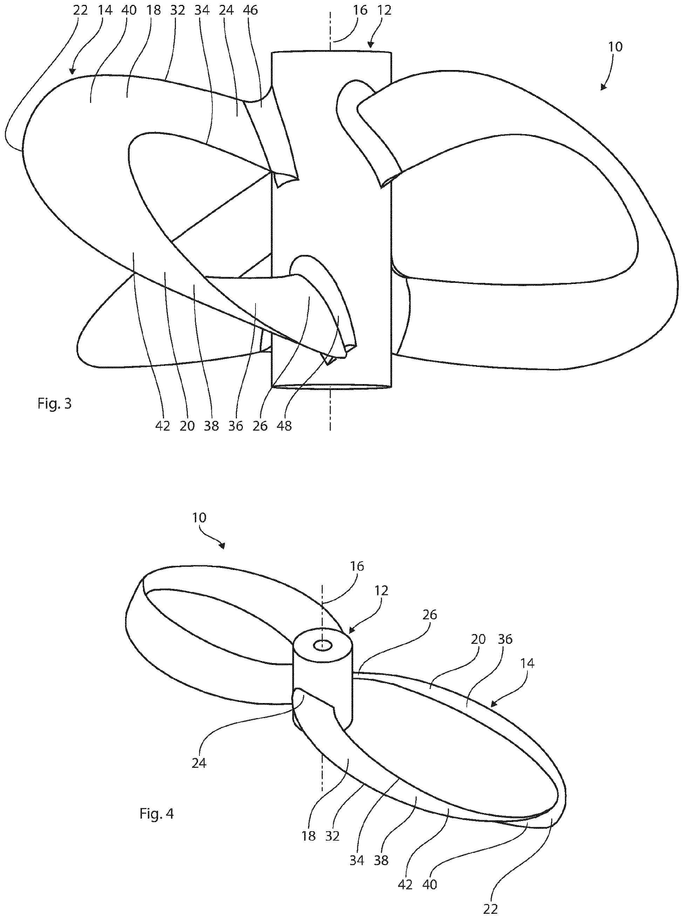

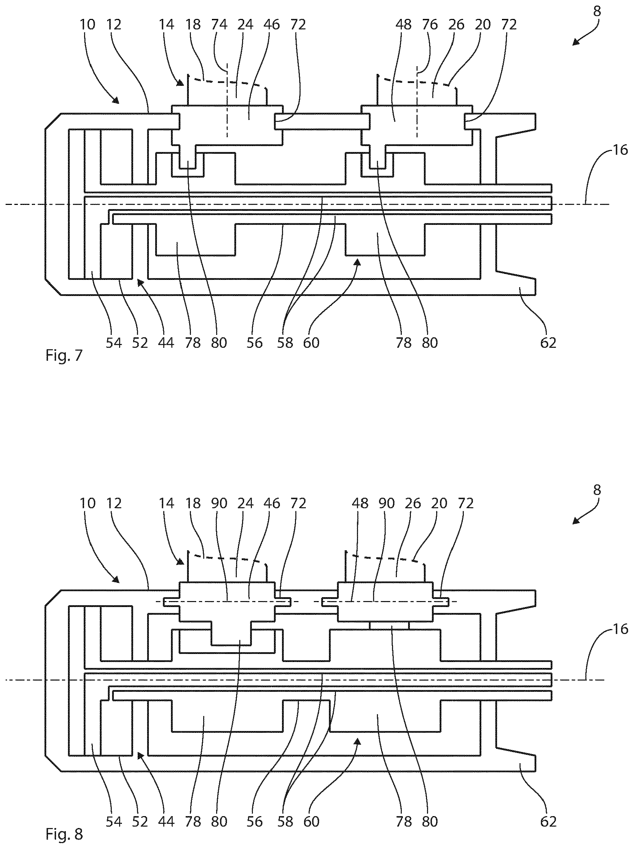

**Fig. 3** is a perspective view of another variable toroidal propeller 10 for high-speed water applications. The propeller 10 forms part of the assembly 8 shown in **Fig. 7****.** The propeller 10 differs from the propeller 10 described in relation to **Fig. 1** by the hub 12 being single a rigid structure and that the points at which the blades 14 connect to the hub 12 are fixed relative to one another. Additionally, each of the first blade fixture 46 and the second blade fixture 48 is connected to the rest of the hub 12 by a rotary joint 72. The first blade fixture 46 can rotate around a first blade axis 74 and the second blade fixture 48 can rotate around a second blade axis 76. Both the first blade axis 74 and the second blade axis 76 are perpendicular to and intersect the propeller centerline 16.

The actuator 44 has a cylinder 52 formed by the hub 12, a double-acting piston 54, and a piston rod 56 can shift relative to the complete hub 12. The propeller 10 has a mechanical connection 60 in the form of yokes 78 fixed to the piston rod 56 and cooperating pins 80 fixed to the first blade fixture 46 and the second blade fixture 48. The pins 80 are off center relative to the first blade axis 74 and the second blade axis 76. The yokes 78 are arranged to cam the pins 80 and rotate the first blade fixture 46 and the second blade fixture 48 at an activation of the actuator 44. The first blade root 24 and the second blade root 26 are respectively fixed to the first blade fixture 46 and the second blade fixture 48. This way, the actuator 44 is operationally coupled to the blade 14 and arranged to deform the blade 14.

**Fig. 4** is a perspective view of another variable toroidal propeller 10 for air applications. The propeller forms part of the assembly 8 shown in **Fig. 14****.** The propeller 10 differs from the propeller 10 described in relation to Fig. 2 by the hub 12 being a single a rigid structure and by the points at which the blades 10 connect to the hub 12 being fixed relative to one another. Additionally, the first blade fixture 46 can rotate around a first blade axis 74 and the second blade fixture (not shown) can rotate around a second blade axis 76. Both the first blade axis 74 and the second blade axis (not shown) are perpendicular to the propeller centerline 16.

The actuator 44 is an electromechanical rotary actuator and the propeller 10 has mechanical connection 60 that operationally couples the actuator 44 to the blade 14. The mechanical connection 60 is composed of an arm 64 connecting the rotary shaft 66 of the actuator 44 to the outer ring of a bearing 68. The inner ring of the bearing 68 in turn is fixed to a hollow rod 82 extending into the hub 12. Yokes 78 are fixed to the hollow rod 82 and cooperating pins 80 are fixed to the first blade fixture 46 and the second blade fixture (not shown). The pins 80 are off center relative to the first blade axis 74 and the second blade axis (not shown). The mechanical connection 60 is further composed of a propeller shaft 70 that extends through the hollow rod 82 and is fixed to the hub 12. In use, the propeller shaft is connected to an electric motor (not shown) that is fixed relative to the actuator 44. The first blade fixture 46 and the second blade fixture (not shown) will then rotate around the first blade axis 74 and the second blade axis (not shown) when the actuator is activated. The first blade root 24 and the second blade root (not shown) are respectively fixed to the first blade fixture 46 and the second blade fixture (not sown). This way, the actuator 44 is operationally coupled to the blade 14 and arranged to deform the blade 14.

**Fig. 6** is a schematic cross-sectional view of another assembly 8 of a variable toroidal propeller 10 and an internal hydraulic actuator 44. The propeller 10 generally corresponds to the propeller 10 described in relation to **Fig. 1** and the actuator generally corresponds to the actuator described in relation to **Fig. 5****.** The propeller 10 differs by the first hub section 28 being connected to the second hub section 30 by a helical joint 84 centered on the propeller centerline 16. This allows the first hub section 28 to both rotate around and shift along the propeller centerline 16 relative to the second hub section 30. The actuator 44 is thus arranged to shift the relative orientations and positions of the first hub section 28 and the second hub section 30.

The first blade fixture 46 is connected to the hub 12 by a spherical joint 86 and the second blade fixture 48 is connected to the hub 12 by a prismatic joint 88 aligned at an angle to the propeller centerline 16. The first blade root 24 and the second blade root 26 are respectively fixed to the first blade fixture 46 and the second blade fixture 48. This way, the orientation of the first blade root 24 and the position of the second blade root 26 are variable relative to the hub 12. The first hub section 28 interconnects the first blade fixture 46 and the actuator 44, and the second hub section 30 interconnects the second blade fixture 48 and the actuator 44. The first blade root 24 is thus arranged to passively shift its orientation relative to the first hub section 28, and in extension relative to the hub 12, at an activation of the actuator 44. Similarly, the second blade root 26 is arranged to passively shift its position relative to the second hub section 28. This means that the actuator 44 is arranged to deform the blade 14 by actively shifting the first hub section 28 relative to the second hub section 30 and by passively shifting the first blade root 24 and the second blade root 26.

**Fig. 8** is a schematic cross-sectional view of another assembly 8 of a variable toroidal propeller 10 and an internal hydraulic actuator 44. The propeller 10 generally corresponds to the propeller 10 described in relation to **Fig. 3** and the actuator generally corresponds to the actuator described in relation to **Fig. 7****.** The propeller 10 differs by each of the first blade fixture 46 and the second blade fixture 48 being connected to the to the hub 12 by a rotary joint 72 having a tilt axis 90 parallel with the propeller centerline 16. The pins 80 of the mechanical connection 60 conveying work from the actuator 44 to the blade 14 extend perpendicularly to the tilt axes 90 and radially inwards relative to the propeller centerline 16. The yokes 78 are arranged to cam the pins 80 and to tilt the first blade fixture 46 and the second blade fixture 48 in opposite direction around respective tilt axis 90. The first blade root 24 and the second blade root 26 are respectively fixed to the first blade fixture 46 and the second blade fixture 48. This means that the actuator 44 is arranged to deform the blade 14 by actively changing the orientations of the first blade fixture 46 and the second blade fixture 48, and in extension the orientations of the first blade root 24 and the second blade root 26.

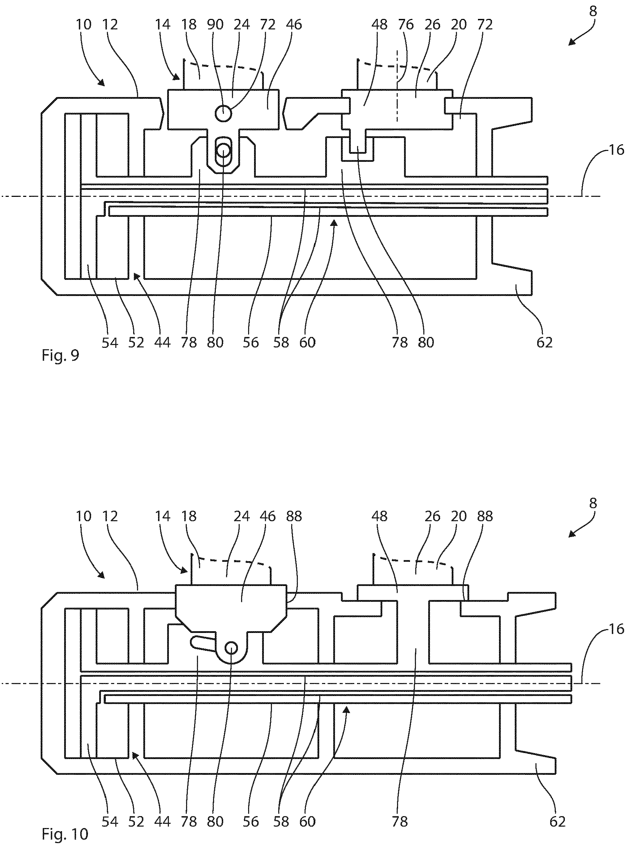

**Fig. 9** is a schematic cross-sectional view of another assembly 8 of a variable toroidal propeller 10 and an internal hydraulic actuator 44. The propeller 10 generally corresponds to the propeller 10 described in relation to **Fig. 3** and the actuator generally corresponds to the actuator described in relation to **Fig. 7****.** The propeller 10 differs by the first blade fixture 46 being connected to the to the hub 12 by a rotary joint 72 having a tilt axis 90 perpendicular to the propeller centerline 16. The pin 80 of the mechanical connection 60 that conveys work from the actuator 44 to the first blade root 24 is attached to the yoke 78 and extends parallel with the tilt axis 90. The first blade fixture 46 is arranged to cam against the pin 80 and to tilt the first blade fixture 46 lengthwise relative to the hub 12 at an activation of the actuator 44. The pin 80 of the mechanical connection 60 that conveys work from the actuator 44 to the second blade root 26 is arranged as described in relation to **Fig. 7****.** The first blade root 24 and the second blade root 26 are respectively fixed to the first blade fixture 46 and the second blade fixture 48.

This way, the actuator 44 is arranged to deform the blade 14 by actively changing the orientation of both the first blade fixture 46 and the second blade fixture 48.

**Fig. 10** is a schematic cross-sectional view of another assembly 8 of a variable toroidal propeller 10 and an internal hydraulic actuator 44. The propeller 10 generally corresponds to the propeller 10 described in relation to **Fig. 3** and the actuator generally corresponds to the actuator described in relation to **Fig. 7****.** The propeller 10 differs by the first blade fixture 46 being connected to the to the hub 12 by a prismatic joint 88 arranged to shift the position of the first blade fixture 46 radially relative to the propeller centerline 16. The propeller 10 further differs by the second blade fixture 48 being connected to the hub 12 by a prismatic joint 88 arranged to shift the position of the first blade fixture 46 along the propeller centerline 16. The pin 80 forming part of the mechanical connection 60 conveying work to the first blade root 24 extends perpendicularly to the propeller centerline 16, and the yoke 78 is arranged to cam the pin 80 and to shift the first blade fixture 46 radially relative to the hub 12 at an activation of the actuator 44. The other yoke 78 is fixed to the second blade fixture 48 and thus arranged to shift the position of the second blade fixture 48 parallel with the propeller centerline 16. The first blade root 24 and the second blade root 26 are respectively fixed to the first blade fixture 46 and the second blade fixture 48. This way, the actuator 44 is arranged to deform the blade 14 by actively changing the positions of both the first blade fixture 46 and the second blade fixture 48.

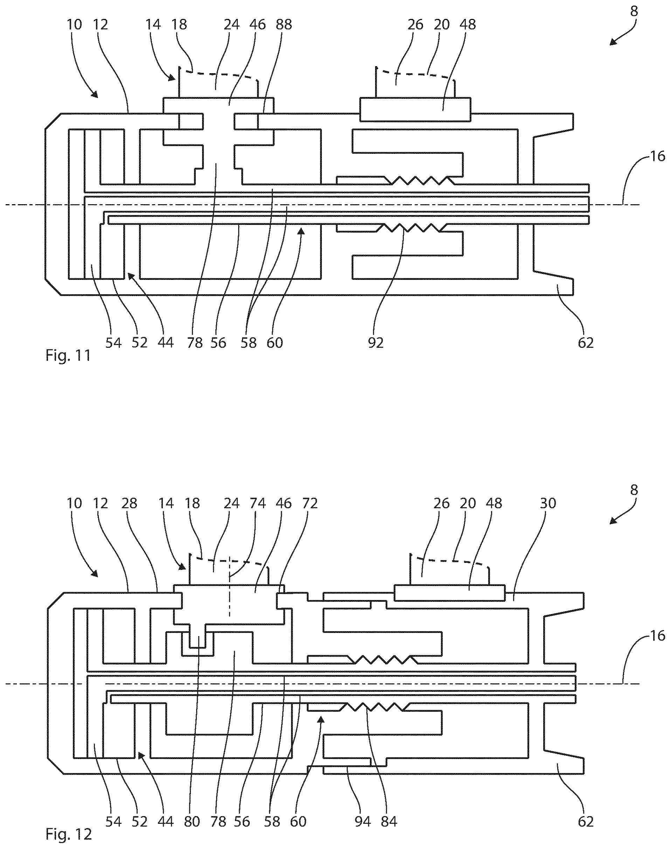

**Fig. 11** is a schematic cross-sectional view of another assembly 8 of a variable toroidal propeller 10 and an internal hydraulic actuator 44. The propeller 10 generally corresponds to the propeller 10 described in relation to **Fig. 3** and the actuator generally corresponds to the actuator described in relation to **Fig. 7****.** The propeller 10 differs by the first blade fixture 46 being connected to the to the hub 12 by a limited cylindrical joint 106 allowing the first blade fixture 46 to shift both parallel with and tangentially to the propeller centerline 16. The second blade fixture 48 is fixed to the hub 12. The propeller further differs by the mechanical connection 60 conveying work to the first blade root 24 has a helical joint 92 centered on the propeller centerline 16 and connecting the piston rod 56 and the hub 12. The piston rod 56 rotates around and shifts parallel with the propeller centerline 16 when the actuator 44 is activated. The first blade fixture 46 is fixed to the single yoke 78 of the mechanical connection 60. The first blade root 24 is fixed to the first blade fixture 46, and the actuator is thus arranged to deform the blade 14 by actively changing the position of the first blade fixture 46.

**Fig. 12** is a schematic cross-sectional view of another assembly 8 of a variable toroidal propeller 10 and an internal hydraulic actuator 44. The propeller 10 generally corresponds to the propeller 10 described in relation to **Fig. 1** and the actuator generally corresponds to the actuator described in relation to **Fig. 6****.** Instead of the helical joint 84 directly connecting the first hub section 28 and the second hub section 30, it connects the first hub section 28 and the piston rod 56, and the latter is in turn fixed to the second hub section 30. The first hub section 28 and the second hub section 30 are directly connected by a cylindrical joint 94. The first hub section 28 will shift along and rotate around the propeller centerline 16 relative to the second hub section 30 at an activation of the actuator 44.

The propeller 10 further differs by the first blade fixture 46 being connected to the first hub section 28 by a first rotary joint 72 such that it can rotate around a first blade axis 74 that is perpendicular to and intersect the propeller centerline 16. This corresponds to the first blade fixture 46 described in relation to **Fig. 7****.** The second blade fixture 48 is fixed to the second hub section 30, as described in relation to **Fig. 1****.** The first hub section 28 and the second hub section 30 form part of the mechanical connection 60 transferring work from the actuator 44 to the blade 14. The single yoke 78 and pin 80 of the mechanical connection 60 is arranged to rotate the first blade fixture 46 at the shift in position and orientation of the first hub section 28 and the second hub section 30. The first blade root 24 and the second blade root 26 are respectively fixed to the first blade fixture 46 and the second blade fixture 48. This way, the actuator 44 is operationally coupled to the blade 14 and arranged to deform the blade 14.

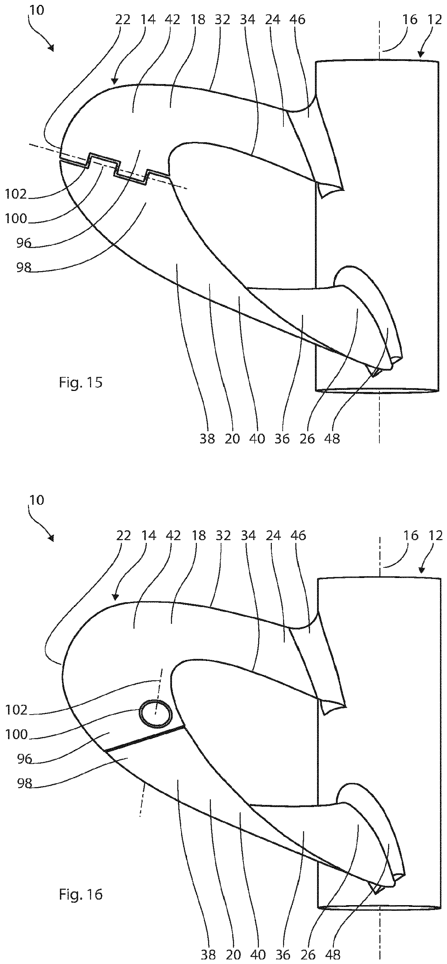

**Fig. 15** is a perspective view of the blade 14 and hub 12 of a variable toroidal propeller 10. The propeller 10 generally corresponds to the propeller 10 described in relation to **Fig. 3****.** It differs by the blade 14 being of stainless steel instead of carbon-fiber reinforced polymer. The propeller 10 is further an articulated structure composed of a first blade segment 96, a second blade segment 98, and an interconnecting articulated joint 100 in the form of a hinged joint. The articulated joint 100 has a rotational axis 102 aligned with the first side surface 36 and the second side surface 38 of the blade 14. The articulated joint 100 is located at the blade tip 22, which means that the first blade segment 96 and second blade segment 98 respectively corresponds to the above-mentioned first blade portion 18 and second blade portion 20.

**Fig. 16** is a perspective view of the blade 14 and hub 12 of a variable toroidal propeller 10. The propeller 10 generally corresponds to the propeller 10 described in relation to **Fig. 15** and differs by the interconnecting articulated joint 100 having a rotational axis 102 transverse to the first side surface 36 and the second side surface 38 of the blade 14 and by the first blade segment 96 and the second blade segment 98 overlapping at the articulated joint 100. The propeller 10 further differs by the second blade portion 20 being divided into the first blade segment 96 and the second blade segment 98.

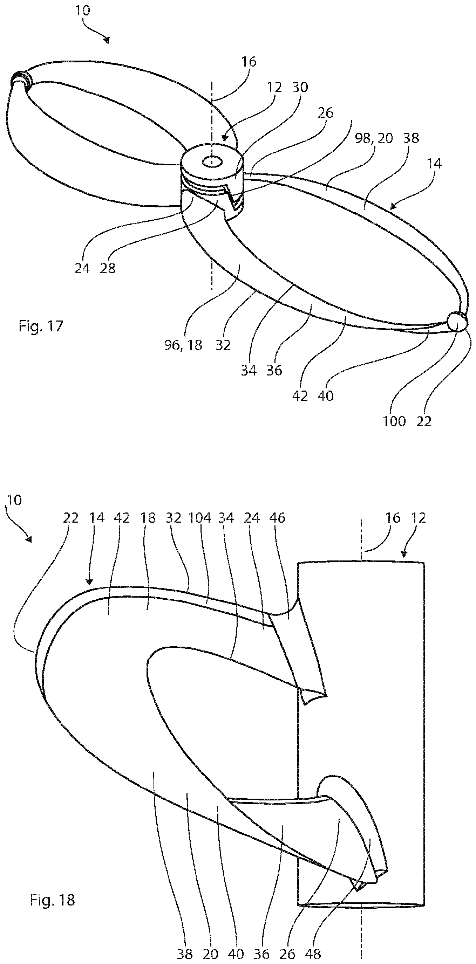

**Fig. 17** is a perspective view of the blade 14 and hub 12 of a variable toroidal propeller 10. The propeller 10 generally corresponds to the propeller 10 described in relation to **Fig. 2****.** It differs by the propeller 10 being of a non-reinforced polymer and by the propeller 10 being an articulated structure composed of a first blade segment 96, a second blade segment 98, and an interconnecting articulated joint 100 in the form of a spherical joint. The articulated joint 100 is located at the blade tip 22, which means that the first blade segment 96 and the second blade segment 98 respectively corresponds to the above-mentioned first blade portion 18 and second blade portion 20. The blade 14 further differs by narrowing towards the blade tip 22 with the chord length at the blade tip 22 being about 50 % of the maximum chord length of the blade 14. The propeller further differs by having a cam joint 106 between the first hub section 28 and the second hub section 30 instead of a prismatic joint 50. The cam joint 106 is arranged to rotate the first hub section 28 and the second hub section 30 relative to one another around the propeller centerline 16 when the actuator 44 shown in Fig. 13 shifts the relative positions of the first hub section 28 and the second hub 30 section along the propeller centerline 16.

**Fig. 18** is a perspective view of the blade 14 and hub 12 of a variable toroidal propeller 10. The propeller 10 generally corresponds to the propeller 10 described in relation to **Fig. 3****.** The blade 14 differs by having a protective shield 104 of stainless steel protecting the carbon-fiber reinforced polymer that primarily forms the blade 14. The shield 104 is in the form of a sheet that is located at and bent around the leading edge 32 of the blade 14, thus protecting the carbon-fiber reinforced polymer from tip vortex cavitation.

### ITEM LIST

8 assembly
10 propeller
12 hub
14 blade
16 propeller centerline
18 first blade portion
20 second blade portion
22 blade tip
24 first blade root
26 second blade root
28 first hub section
30 second hub section
32 leading edge
34 trailing edge
36 first side surface
38 second side surface
40 blade face
42 blade back
44 actuator
46 first blade fixture
48 second blade fixture
50 prismatic joint
52 cylinder
54 double-acting piston
56 piston rod
58 hydraulic conduits
60 mechanical connection
62 lugs
64 arm
66 rotary shaft
68 bearing
70 propeller shaft
72 rotary joint
74 first blade axis
76 second blade axis
78 yoke
80 pin
82 hollow rod
84 helical joint
86 spherical joint of blade fixture
88 prismatic joint of blade fixture
90 tilt axis
92 helical joint
94 cylindrical joint
96 first blade segment
98 second blade segment
100 articulated joint
102 rotational axis
104 protective shield
106 cam join

## Claims

1. A variable toroidal propeller (10), wherein the propeller (10) comprises:
- a hub (12) and
- a toroidal propeller blade (14) connected to the hub (12),
the hub (12) is arranged to operationally couple the blade (14) to an actuator (44), and the blade (14) is arranged to deform at an activation of the actuator (44).

2. The variable toroidal propeller (10) according to claim 1, wherein the blade (14) has a blade tip (22) and is composed of a first blade portion (18) and a second blade portion (20) that are connected at the blade tip (22), the blade (14) comprise a first blade root (24) and a second blade root (26), the first blade root (24) connects the first blade portion (18) to the hub (12) and second blade root (26) connects the second blade portion (20) to the hub (12), and the actuator (44) is arranged to deform the first blade portion (18).

3. The variable toroidal propeller (10) according to claim 2, wherein the blade (14) has a blade face (40) and the blade (14) is arranged to cooperate with the actuator (44) to change the geometry of the blade face (40) at a blade section of the first blade portion (18).

4. The variable toroidal propeller (10) according to claim 3, wherein the blade (14) has a blade tip (22) and the blade section is at the blade tip (22).

5. The variable toroidal propeller (10) according to any of the claims 2 to 4, wherein the blade (14) is arranged to cooperate with the actuator (44) to change the pitch of the first blade portion (18) and/or the second blade portion (20) at an activation of the actuator (44).

6. The variable toroidal propeller (10) according to any of the claims 2 to 5, wherein the first blade root (24) and the second blade root (26) are disconnected at the hub (12).

7. The variable toroidal propeller (10) according to any of the claims 2 to 6, wherein the hub (12) comprises a first hub section (28) and a second hub section (30), the first hub section (28) and the second hub section (30) are structurally separate and have adjustable relative orientations and/or positions, the first blade root (24) is connected to the first hub section (28) and the second blade root (26) is connected to the second hub section (30), and the actuator (44) is arranged to shift the relative orientations and/or positions of the first hub section (28) and the second hub section (30).

8. The variable toroidal propeller (10) according to claim 7, wherein the first blade root (24) is fixed to the first hub section (28).

9. The variable toroidal propeller (10) according to any of the claims 2 to 7, wherein the hub (12) comprises a first blade fixture (46) that connects the first blade root (24) to the hub (12), and the first blade fixture (46) is arranged to operationally connect to the actuator (44) and to shift its orientation and/or position relative to the hub (12) at an activation of the actuator (44).

10. The variable toroidal propeller (10) according to claim 9, wherein the first blade fixture (46) is arranged to rotate and/or tilt relative to the hub (12) at an activation of the actuator (44).

11. The variable toroidal propeller (10) according to claim 9 or 10, wherein the first blade fixture (46) is arranged to shift its position relative to the hub (12) at an activation of the actuator (44).

12. The variable toroidal propeller (10) according to any of the claims 1 to 11, wherein the blade (14) is a monolithic structure and composed of fiber reinforced polymer.

13. The variable toroidal propeller (10) according to any of the claims 1 to 11, wherein the blade (14) is an articulated structure and composed of metal.

14. The variable toroidal propeller (10) according to claim 13, wherein the blade (14) comprises a first blade segment (96), a second blade segment (98), and an articulated joint (100), wherein the first blade segment (96) and the second blade segment (98) are juxtaposed and interconnected by the articulated joint (100).

15. An assembly (8) comprising a variable toroidal propeller (10) according to any of the claims 1 to 14 and an actuator (44), wherein the actuator (44) is operationally coupled to the blade (14) and arranged to deform the blade (14).
